# EUROPEAN PATENT APPLICATION

(11) **EP 2 377 408 A2**
(43) Date of publication of application: **19.10.2011**
(21) Application number: 09835197.6
(22) Date of filing: 07.12.2009
(51) Int. Cl.: A23L 1/327, A23L 1/27

(54) **FISH SAUCE SEASONING AND PREPARATION METHOD OF THE SAME**

(30) Priority: 24.12.2008 KR 20080133910
(71) Applicant: CJ CheilJedang Corporation, Seoul, 100-400 (KR)
(72) Inventor: KIM, Boo Won, Seoul 152-771 (KR); EOM, So Youn, Yongin-si Gyeonggi-do 448-981 (KR); CHUNG, Won Dae, Seoul 150-894 (KR)
(74) Representative: Luderschmidt, Schüler & Partner
(86) International application number: PCT/KR2009/007282
(87) International publication number: WO 2010/074431

(57) **Abstract**

The present invention relates to a preparation method of fish sauce seasoning, the method comprising: (a) decolorizing and deodorizing a liquid fish sauce; (b) concentrating the fish sauce from the step (a) and crystallizing salts contained in the fish sauce; (c) separating the fish sauce concentrate (b) and the crystallized salts; and (d) repeating the (b) and (c) steps at least once, and to a fish sauce seasoning prepared by the method. The fish sauce seasoning of the present invention has a high total nitrogen content and is a natural seasoning material as chemical additives are neither contained in raw materials of the seasoning nor added during a processing thereof, and the seasoning's nicely salty and palatability makes it useful as a substitute material for MMG and nucleic acid that are classified as synthetic additives.

## Description

### [Technical Field]

The present invention relates to a method for preparing a fish sauce seasoning as a natural seasoning material and a fish sauce seasoning prepared by the method.

### [Background Art]

In accordance with an increase in consumer demand for healthy and natural materials, attempts have been made to increase the use of natural ingredients for processed products and the efforts to avoid use of chemical food additives have been accelerated. In particular, in accordance with the demand for the non-addition of monosodium glutamate (MSG) and an increase in the necessity for natural seasonings in the seasoning field represented by flavorings and ramen sauces, a great deal of research to avoid the use of synthetic additives such as MSG, inosine monophosphate (IMP), guanosine monophosphate (GMP), which were conventionally used as representative flavor enhancers, and thesearch for natural materials which render inherent unique palatability or improve other flavors is actively being made. In recent years, yeast extract is the most widely used natural flavoring material which replaces synthetic additives exhibiting savory sensation. Yeast extract is a natural seasoning in which yeast cultured through fermentation is self-digested and proteins contained therein are thus degraded into peptides containing flavoring ingredients. However, the quality of yeast extract is greatly varied depending on the type of yeast. Yeast extract is an alternative to synthetic seasonings such as MSG. Recently developed high-quality yeast extracts exclusively depend on income products and are thus highly expensive, thus disadvantageously entailing economic limitations on use.

A variety of documents have showed that natural flavor enhancers that are used instead of MSG, IMP and GMP are mostly peptides derived from degradation products of proteins. Degradation products obtained from proteins as base materials by degradation enzymes or 500 to 1000 kDT peptides produced from fermented foods such as soy sauce, soybean paste (doenjang) or fish sauce are reported to have the ability to enhance palatability and other flavors. The afore-mentioned traditional fermented foods such as soy sauce, soybean paste (doenjang) or fish sauce exhibit unique inherent flavors through fermentation and aging, and deep flavors based on peptides degraded from protein. MSG, IMP, GMP and the like which has been widely used as single products in the food industry cannot replace materials exhibiting considerably potent flavor-enhancing property. This is the reason that traditional fermented foods such as soy sauce, soybean paste (doenjang) or fish sauce contain a relatively great amount of flavoring ingredients, but contain, in a low amount, total nitrogen content, used as a flavor-enhancing ingredient index, and a relatively great amount of salts in order to prevent decay during fermentation, as compared to artificial seasonings. Comparison of total nitrogen and salt contents between these traditional fermented foods are shown in the following Table 1.

**TABLE 1**

| Comparison in total nitrogen and salt contents between traditional fermented foods | | | |
|---|---|---|---|
| | Soy sauce (Korean soy sauce) | Soybean paste (Doenjang) | Fish sauce |
| TN content | ~1.0 | about 3.0 | 1.2~1.4 |
| Salt content | 25% | 13~15% | 25~27% |
| Phase | Liquid | Solid | Liquid |

Total nitrogen (TN) content is a flavoring ingredient index of protein degradation foods. As protein content increases, flavoring ingredients derived from amino acids and peptides are present in greater amounts. In addition, traditional fermented foods are deep in color and emit unique odors during fermentation, thus having limitation on general use in the food industry.

MSG, IMP and GMP provided in the form of a single product are inherently colorless, tasteless and odorless, but they provide excellent palatability and deepness, although added in a small amount to foods. Accordingly, natural seasonings should have weak inherent unique flavors and tastes and contain a great amount of flavoring ingredients so that they can replace MSG, IMP and GMP. From this viewpoint, the afore-mentioned problems such as high salt content, deep color and inherently unpleasant strong flavor is to be solved in order that traditional fermented materials can be used as flavorings having superior seasoning property.

Meanwhile, among a variety of traditional fermented foods, fish sauce also called "aekjeot" in Korean is a material fermented from animal protein, which contain nucleic acid, rich in marine products as well as proteins, in a great amount, as compared to ingredients fermented from plant materials and thus exhibits superior sensory properties, and is present in a liquid phase and is thus suitable for processing. In addition, fish sauce is relatively cheap and is thus high-valued as a natural flavoring material in terms of industrial economic efficiency.

In this regard, attempts have been made to develop natural flavorings using cheap anchovy fish sauce as an ingredient. For example, Korean Patent Laid-open No. 2004-85104 discloses a method for preparing a natural flavor enhancer using large anchovy, medium anchovy, small anchovy, dry seaweed and dry kelp as main ingredients and a composition comprising the same. However, this patent relates to a mixture of powder ingredients obtained by grinding natural ingredients such as anchovy, dry seaweed and dry kelp, followed by mixing. This patent is considerably distinguished from the present invention in terms of the objects of invention and characteristics of products. In addition, this patent suggests preparation of a mixed powder using natural ingredients, but has problems wherein the mixed powder does not exhibit comparable savory sensation to MSG and other synthetic seasonings and the powdery product is insoluble in an aqueous solution, thus having limitations on application to a variety of foods. Korean Patent No. 10-0774537 discloses a functional anchovy fish sauce and a method for preparing the same. Specifically, this patent relates to a method for preparing an anchovy-fermented seasoning, comprising deodorizing an anchovy-fermented extract and adding glucose thereto. The anchovy-fermented seasoning prepared by the method is not a complete natural flavor-enhancing ingredient in that sodium bicarbonate is added during the process. This patent is considerably different from the present invention in terms of characteristics and ingredient contents of the final products. The method broadly comprises a process for increasing total nitrogen and amino acid contents, based on a process for increasing TN content by 50%, as compared to conventional anchovy fish sauces, but still has a high salt content due to the nature of fish sauce and a low solid content due to the presence in a liquid phase, thus having limitations on the general use as a seasoning for a variety of processed foods and inability to replace synthetic seasonings. In addition, the anchovy fish sauce has a low concentration of flavoring ingredients, thus having limited savory sensation.

### [Disclosure]

### [Technical Problem]

As a result of an attempt to replace synthetic seasonings with fish sauce among traditional fermented foods, the inventors of the present invention developed a fish sauce seasoning which exhibits clean flavors and superior savory sensation to an extent that anchovy fish sauce is not presumed to be used as an ingredient, and can replace conventional synthetic flavor enhancers using a simple method that includes a series of concentration and desalination processes, thus completing the present invention.

### [Technical Solution]

It is one aspect of the present invention to provide a method for preparing a fish sauce seasoning, including (a) decolorizing and deodorizing a liquid fish sauce; (b) concentrating the fish sauce obtained in step (a) and precipitating salts contained in the fish sauce in the form of a crystal; (c) separating the fish sauce concentrate and the crystalline salts obtained in step (b) from each other; and (d) repeating steps (b) and (c) one or more times.

It is another aspect of the present invention to provide a fish sauce seasoning as a natural seasoning ingredient prepared by the method.

### [Advantageous Effects]

The fish sauce seasoning of the present invention can be prepared in a simple manner using a fish sauce as a natural material and exhibits superior savory sensation, comparable or superior to synthetic flavor enhancers such as MSG, IMP and GMP, in spite of being a natural seasoning, thus being useful as an alternative to synthetic seasonings and commercially available natural seasonings.

### [Description of Drawings]

The above and other objects, features and other advantages of the present invention will be more clearly understood from the following detailed description taken in conjunction with the accompanying drawings, in which:

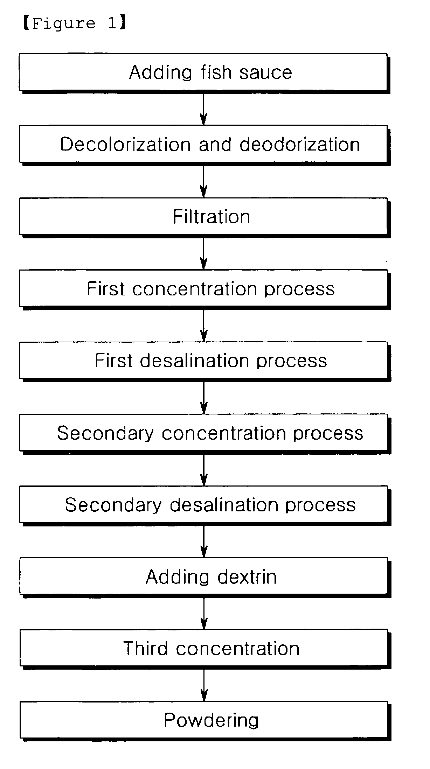

FIG. 1(A) is a flow chart schematically illustrating a process for preparing the fish sauce seasoning according to one embodiment of the present invention. The drawing illustrates a series of processes for concentrating protein ingredients of fish sauce, which has an essential role in exhibiting savory sensation, by subjecting a fish sauce, as a base material, to sequential concentration and desalination processes.

### [Best Mode]

In one aspect, the present invention is directed to a method for preparing a fish sauce seasoning as a natural seasoning including:
(a) decolorizing and deodorizing a liquid fish sauce;
(b) concentrating the fish sauce obtained in step (a) and precipitating salts contained in the fish sauce in the form of a crystal;
(c) separating the fish sauce concentrate and the crystalline salts obtained in step (b) from each other; and
(d) repeating steps (b) and (c) one or more times.

As used herein, the term "fish sauce", also called "aekjeot", refers to a food fermented from animal protein. The animal protein is preferably derived from fish. Examples of the fish include, but are not limited to, anchovy, hairtail, sand lance, shrimp and the like.

As used herein, the term "seasoning" refers to a substance which is added to food used as a main ingredient to enhance and control flavors of intended dishes, in particular, refers to a flavor enhancer which exhibits palatability or sweetness. Accordingly, for convenience, the term "seasoning" as used herein is intended to include flavor enhancers. The seasoning of the present invention is composed of natural flavor-enhancing ingredients and may be used as an alternative to conventional synthetic flavor-enhancing ingredients.

In step (a), a liquid fish sauce is decolorized and deodorized.

The decolorizing and deodorizing processes are carried out using a method well-known in the art. In one embodiment, activated carbon is used for the decolorization and deodorization processes. In this case, activated carbon is used in an amount of 0.5 to 2.0% by weight, preferably 0.8 to 1.2% by weight, based on the total weight of the fish sauce. In addition, in the case where activated carbon is used, the activated carbon is allowed to stand at room temperature or higher, preferably, 50 to 60°C, for one hour or longer, preferably 2 hours or longer, more preferably for 2 to 3 hours. In the case where activated carbon is used, 3 to 5% by weight of diatomite, based on the total weight of the fish sauce is added to a fish sauce containing the activated carbon in order to improve sensory properties of the final fish sauce seasoning product, and the fish sauce is filtered through a filter press to remove the activated carbon.

In step (b), the decolorized and deodorized fish sauce obtained in step (a) is concentrated and salts contained in the fish sauce are precipitated in the form of a crystal.

The concentration process aims to increase a concentration of solid particles suspended in the fish sauce. Such a concentration process may be generally carried out using a concentrator or by adding an additive such as precipitation accelerators or cohesive agents. However, the concentration of the natural seasoning ingredient of the present invention is preferably carried out using a concentrator without using any additive. In one embodiment, the concentration is carried out by heating a fish sauce to 50 to 60°C and concentrating the same using a concentrator. The concentration of the fish sauce may be carried out at a temperature of lower than 50°C or exceeding 60°C. However, it is not preferable that the concentration is carried out at a temperature lower than 50°C, since concentration time is lengthened and preparation costs is increased. In addition, it is not preferable that the concentration is carried out at a temperature exceeding 60°C, since the color of the fish sauce becomes dark and the product qualities are deteriorated.

When the solubility of salts contained in the fish sauce reaches saturation in the concentration process, oversaturated salts are precipitated in the form of fine crystals. The precipitated salt crystals are removed in the following step (c).

After the concentration process, the concentration of the fish sauce is increased to 200 to 400%, preferably, 250 to 300%, based on the protein level, as compared to the concentration of fish sauce before the concentration. However, this increase in concentration may be controlled depending on the level of total nitrogen present in the final fish sauce seasoning product.

In step (c), the fish sauce concentrate and crystalline salt obtained in step (b) are separated from each other.

The separation in step (c) may be carried out using a variety of methods, which may be applied in the art, such as centrifugation, electrolysis and continuous desalination/ concentration. In one embodiment, the separation is carried out by adding water to the ingredients, while centrifuging. When the centrifugation is performed and at the same time, water is added, the fish sauce concentrate is instantly dissolved in water and is layer-separated from the crystalline salt. Specifically, the centrifugation is carried out at a low rate, preferably, 100 to 1,000 rpm, more preferably 400 to 600 rpm and using water in a small amount, preferably 20 to 40% by weight, based on the total weight of the fish sauce concentrate.

In step (d), steps (b) and (c) are repeated one or more times, preferably 1 to 10 times, more preferably, 1 to 8 times, more even preferably 1 to 5 times, most preferably 2 to 3 times.

Step (d) depends on the total nitrogen content of the final fish sauce seasoning product. For example, the fish sauce seasoning which underwent the process of step (d) once has a total nitrogen content of 3.8 to 4.0% which is about 2.8 to 3.0 times higher than the original fish sauce which does not undergo the preparation process. In addition, the fish sauce seasoning which underwent the process of step (d) twice contains total nitrogen in an amount of 5.0 to 5.3% which is about 3.7 to 3.9 times higher than the original fish sauce which does not undergo the preparation process. Accordingly, the number of repetitions of step (d) may be suitably controlled depending on total nitrogen content of the final fish sauce seasoning product. In addition, in the case where the final fish sauce seasoning product is provided in a solid, such as powder, total nitrogen content of the final fish sauce seasoning product may be increased in the following step (e). Taking this aspect into consideration, the number of repetitions of step (d) may be suitably controlled.

In another aspect, the present invention is directed to a fish sauce seasoning in the form of a solid obtained in the afore-mentioned steps.

Specifically, the preparation method of the present invention may further include (e) powdering the fish sauce concentrate by drying after step (d).

The powdering in step (e) may be carried out using a powdering method well-known in the food field. Examples of powdering include powdering methods using vacuum drying, spray drying, hot air drying, freeze-drying or the like. The powdering allows the fish sauce seasoning of the present invention to be provided in the form of a powder to final consumers. In addition, the powdering process enables the levels of total nitrogen and salts present in the fish sauce seasoning to be higher than that of a liquid fish sauce seasoning.

In addition, in one embodiment, the method may further include adding an excipient prior to the powdering process in step (e) to prevent carbonation of the fish sauce and solidification and moisture absorption during storage and distribution after powdering.

The excipient is added to prevent carbonation of fish sauce and examples thereof include glucose, dextrin, starch, lactose and the like. Any excipient may be used so long as it meets the Korean Food Standards Codex and is suitable for the intended purpose of the final fish sauce seasoning.

In another aspect, the present invention is directed to a fish sauce seasoning prepared by the method of the present invention.

The fish sauce seasoning prepared by the method of the present invention has a total nitrogen content of 2.8% or more, preferably 3.0% or more, more preferably 3.0 to 7.0%, based on the total weight of the seasoning, and a salt content of 23% or more, preferably 23 to 45%, more preferably 25 to 45%. Accordingly, the fish sauce seasoning of the present invention has a total nitrogen content of about 3 times or more, preferably 4 times or more, more preferably 5 times or more, as compared to the initial fish sauce. In addition, the fish sauce seasoning of the present invention exhibited about 3 times higher glutamic acid content (known to be closely related to seasoning sensation) than an original fish sauce. In addition, the fish sauce seasoning of the present invention has superior total nitrogen content and equivalent glutamic acid and salt contents to commercially available natural seasonings. Accordingly, the fish sauce seasoning of the present invention is useful as a natural seasoning material.

The fish sauce seasoning of the present invention may be provided in a general seasoning form, that is, a liquid or solid phase. Preferred is a liquid or powdered solid.

### [Best mode]

Hereinafter, the present invention will be described in more detail with reference to the following Examples. These examples are only provided to illustrate the present invention and should not be construed as limiting the scope and spirit of the present invention.

### Example 1: Preparation of fish sauce seasoning having total nitrogen (TN) content of 5.0

### 1-1. Preparation of raw materials

An anchovy fish sauce made in Cheju-do fermented for 30 months or longer was purchased from Hasunjung General Food Co., Ltd. The anchovy fish sauce has a total nitrogen (TN) content of 1.35 to 1.40%. In addition, the optical density (O.D) and odor intensity of the anchovy fish sauce were measured. The O.D value has a positive correlation with color deepness. The O.D. value is an indicator of brightness of anchovy fish sauce and general water has an O.D of 0. The results thus obtained are shown in Table 2 below.

### 1-2. Deodorizing and decolorizing

1.0% of activated carbon based on the total weight of the fish sauce was added to the anchovy fish sauce of Example 1-1, and allowed to stand at a temperature of 50 to 60°C for 2 hours. Then, 3 to 5% of diatomite, based on the total weight of the fish sauce, was added thereto to remove activated carbon and was filtered through a filter press. The anchovy fish sauce thus obtained was much brighter than the initial fish sauce and exhibited a decrease in unique odor of fish sauce. In addition, it was observed that the powdered activated carbon exhibited superior color adsorption, as compared to liquid activated carbon and was effective in decolorizing. The O.D value and odor intensity of the anchovy fish sauce which underwent the decolorizing and deodorizing processes were measured. The results thus obtained are shown in Table 2 below.

**TABLE 2**

| Comparison between before and after decolorizing and deodorizing of anchovy fish sauce | | |
|---|---|---|
| | O.D (optical density) | Odor intensity* |
| Before reaction | 0.785 | 5 |
| After reaction | 0.08 | 1.5 |

| | | |
|---|---|---|
| * Odor intensity - 1: No fish sauce odor; 3: medium fish sauce odor; 5: original odor of fish sauce concentrate. | | |

As can be seen from Table 2 above, by comparing the color of anchovy fish sauce between before and after reaction, light absorbance was considerably decreased from 0.785 to 0.08. This result means that the fish sauce became brighter in color. In addition, in terms of odor intensity, the inherent odor of fish sauce was eliminated through the treatment.

### 1-3. Primary concentration

To concentrate the decolorized and deodorized fish sauce of Example 1-2, the fish sauce was heated to 50 to 60°C. When the temperature reached 60°C, the fish sauce was concentrated in a continuous vacuum concentrator and primary concentration was continued until the fish sauce was 53 to 55 brix. When the temperature increases, the product becomes dark in color. For this reason, the temperature was maintained at 50 to 60°C. During concentration, solubility of salt reached saturation and, and a part of the salt was then oversaturated and precipitated as fine crystals. The crystals were removed in the subsequent process.

### 1-4. Primary desalination

The concentrated fish sauce obtained in Example 1-3 was placed in a centrifugal separator to remove the oversaturated and precipitated salt part. The fish sauce was centrifuged at a rate of 500 rpm or more and a small amount of water was instantly added thereto. As a result, proteins were melted and separated from the crystallized salt. After centrifugation was completed, the salt and the fish sauce concentrate were separated from each other. After primary desalination, the fish sauce ingredient was assayed. As a result of assay, the content of total nitrogen (TN) was 3.8 to 4.0% and the content of salt was 24 to 25%. The total nitrogen and salt contents were measured using Kjeldahl and Mohr methods mentioned in the Korean Food Standards Codex.

### 1-5. Secondary concentration and desalination

The fish sauce concentrate having undergone primary desalination was concentrated in a continuous vacuum concentration pipe at a temperature of 50 to 60°C until the fish sauce concentrate was 65 brix. After the concentration was completed, the fish sauce was desalinated in the same manner as in Example 1-4 using a centrifugal separator at a rate of 500 rpm to obtain a fish sauce concentrate containing about 5.0 to 5.3% of total nitrogen (TN) and about 21 to 23% of a salt. When the concentration is performed, the oversaturated salt was precipitated and the dissolved salt was present in an equivalent amount and only total nitrogen content (protein content) increased. The fish sauce concentrate having an increased total nitrogen content could be obtained through primary and secondary concentration.

The fish sauce concentrate finally obtained in the present process may be used as a fish sauce paste containing a large amount of total nitrogen depending on the purpose. The fish sauce concentrate may be powdered and applied to final products for more convenience.

### Example 2: Preparation of fish sauce powder seasoning

### 2-1. Mixing of excipient

The concentrate separated from the salt prepared in Example 1 was mixed with dextrin prior to vacuum concentration powdering (vacuum drying). At this time, the reason for mixing dextrin therewith is to prevent carbonation of fish sauce and reduce variation in color during vacuum concentration powdering. 10% of maltodextrin with respect to the total solid of the concentrate was stirred in a tank provided with a stirrer for 20 minutes such that the maltodextrin was homogeneously mixed with the concentrate.

### 2-2. Drying

The inventors of the present invention performed the following two types of drying processes to powder the fish sauce concentrate.

### (1) Vacuum drying

In order to completely dry the fish sauce concentrate which had been mixed with an excipient in Example 2-1, the fish sauce concentrate was dried in a vacuum drier at a temperature of 85 to 90°C and a pressure of 700 mmHg for 5 hours. After drying, moisture content was less than 2%, which indicates complete drying. The vacuum-dried blocks were ground in a powder grinder (Hammermill) to obtain a powder having a particle size of 40 mesh or more.

### (2) Spray drying

The supply condition required for spray drying was 40 to 45 brix. Accordingly, the fish sauce concentrate mixed with an excipient of Example 2-1 was hydrolyzed to adjust the concentration thereof to 40 to 45 brix. The temperature of fish sauce concentrate was adjusted to 50°C and the fish sauce concentrate was spray-dried in a spray drier preheated to 160°C.

### Example 3: Comparison in ingredients between fish sauce seasoning of the present invention and initial fish sauce

In order to confirm effects of the fish sauce seasoning of the present invention as a natural seasoning ingredient, ingredients and sensory properties of the fish sauce were compared with those of the initial fish sauce used as a raw material.

**TABLE 3**

| Comparison in ingredients between initial fish sauce and fish sauce powder | | |
|---|---|---|
| | Initial fish sauce | Fish sauce powder |
| Total nitrogen (TN) content (%) | 1.35~1.40% | 6.5~7.0% |
| Glutamic acid content (%) | 1.7% | 4.9% |
| Salt content (%) | 27% | 40% |

The fish sauce having initial total nitrogen content of 1.35 to 1.40% were subjected to concentration and desalination. As a result, the fish sauce exhibited an increase in total nitrogen content to 6.5 to 7.0%, which corresponds to an about 5-fold increase in total nitrogen content. Also, this indicates that the content of flavoring ingredients is increased to an about 5 times. In addition, the content of glutamic acid, which is amino acid, the most closely related to savory sensation, also exhibited a 3-fold increase from 1.7% to 4.9%.

### Example 4: Comparison in ingredients between fish sauce seasoning of the present invention with commercially available natural seasoning

In order to confirm usefulness of the fish sauce seasoning of the present invention as a natural seasoning ingredient, a yeast extract powder (commercially available from D company, one yeast enterprise), which is the most generally used among natural seasoning ingredients, was selected and was compared with the fish sauce seasoning of the present invention in terms of ingredients and content.

**TABLE 4**

| Comparison in ingredients of fish sauce powder, as natural seasoning material | | | |
|---|---|---|---|
| | D company's yeast extract powder (YE) | Fish sauce powder | Comparison of ingredient content |
| Total nitrogen content (%) | 6% | 6.7% | Equivalent to or higher than |
| Glutamic acid content (%) | 5% | 4.9% | Equivalent to YE |
| Salt content (%) | 39±2% | 40±2% | Equivalent to YE |

As a result of ingredient assay, the fish sauce powder of the present invention was shown to have a glutamic acid content of 4.9%, comparable to D company's yeast extract powder, and exhibited a 10% higher total nitrogen content and a salt content, comparable thereto. These results showed that the present invention exhibited glutamic acid and total nitrogen contents, serving as flavoring ingredient indexes which are equivalent to or higher than the commercially widely used yeast extract powder. This shows that the present invention secured sensory properties required for natural seasoning ingredients.

### Example 5: Sensory evaluation of foods prepared using fish sauce seasoning

In order to confirm seasoning function of the fish sauce seasoning of the present invention as a natural material, the fish sauce seasoning was applied to dishes and characteristics thereof were analyzed through sensory evaluation. At this time, two menus including a seaweed soup as a Korean dish and a clam chowder soup as a Western dish were selected and used. Sensory evaluation was carried out on 46 panels in accordance with a 5-grade scale.

### 5-1. Sensory evaluation of seaweed soup

An experimental group in which 0.4% by weight of a fish sauce powder was added to a seaweed soup prepared by cooking 10% by weight of seaweed soaked in water, and a control group in which 1.0% by weight of Korean traditional soy sauce, which is most commonly used in home, was added as a natural seasoning, were prepared. The final content of salt was adjusted to 0.6% by weight to season the soup with a salt. Sensory evaluation was broadly carried out based on six items, i.e., overall taste, palatability, sweetness, deepness, flavors and saltiness. The results thus obtained are shown in Table 5 below.

**TABLE 5**

| **Sensory evaluation of seaweed soup to which fish sauce powder is applied** | | | | | | |
|---|---|---|---|---|---|---|
| | Overall taste | Palatability | Sweetness | Deepness | Flavors | Saltiness |
| Fish sauce powder | 3.90a | 3.83a | 3.80a | 3.76a | 4.03a | 3.21b |
| Korean soy sauce | 3.58b | 3.01b | 3.43b | 3.18b | 3.33b | 3.55a |

In Table above, a and b indicate that there is statistically significant difference. For example, in the case of 3.88a and 3.80a, two scores of 3.88 and 3.80 are considered to be equivalent, since there is no statistically significant difference therebetween.

As can be seen from the sensory test results, the group, to which the fish sauce powder was added, was superior with significant difference in terms of overall taste, palatability, sweetness, deepness and flavors. The evaluation of respective items was based on soup taste, which is an essential evaluation property of natural seasoning ingredients. Interestingly, it can be seen from these results that the group containing the fish sauce powder was evaluated to be less salty, although the two groups had substantially equivalent salt contents in terms of saltiness. This behavior is consistent with a conventional theory in which, as seasoning property increases, saltiness decreases. These results show that the present invention exhibits superior functionality as a natural seasoning ingredient.

### 1-2. Clam chowder soup

Suitable amounts of scallop, onion and potato were added to a cream soup base, followed by seasoning with a pepper to prepare a clam chowder soup. 0.2% by weight of MSG and 0.5% by weight of a fish sauce powder were added to the clam chowder soup, to prepare samples as a control group and an experimental group, respectively. The amounts of MSG and fish sauce powder added to the control and experimental groups were determined based on flavoring functionality tests in an aqueous solution of a single ingredient.

When sensory testing was performed in an amount of 0.1% to 0.5% in an aqueous liquid, 0.2% of MSG began to remarkably exert flavoring function and 0.5% of the fish sauce powder began to exert flavoring function. The salt concentration of final product was adjusted to 0.6% by weight. Sensory evaluation was carried out based on six items, overall taste, palatability, clam flavors, creaminess, greasiness and saltiness. The results thus obtained are shown in Table 6 below. In Table 6, a and b indicate that there is statistically significant difference. For example, in the case of 3.88a and 3.80a, two scores of 3.88 and 3.80 are considered to be equivalent, since there is no statistically significant difference therebetween.

**TABLE 6**

| **Sensory evaluation of clam chowder soup to which fish sauce powder is applied** | | | | | | |
|---|---|---|---|---|---|---|
| Type of group | Overall taste | Palatability | Clam flavors | Creaminess | Greasiness | Saltiness |
| Control group | 3.88b | 3.85a | 3.74b | 4.10a | 3.97a | 3.13a |
| Experimental Group | 4.12a | 3.80a | 3.94a | 3.84b | 3.45b | 3.27a |

The sensory evaluation results of the clam chowder soup showed that the control group exhibited superior creaminess and greasiness with significant difference, and the experimental group exhibited superior overall taste and clam flavors. In terms of palatability and saltiness, there was a slight difference in scores, but there was no significant difference. The experimental group, to which the fish sauce powder was added, exhibited improved clam flavors and superior overall taste due to lower greasiness, as compared to the control group.

Comparing the fish sauce powder of the present invention with MSG, which is a synthetic seasoning material having superior flavor-enhancing properties, in terms of effects, food to which the fish sauce powder was applied did not exhibit identical sensory qualities, but changed flavors such that inherent flavors of food are improved, palatability is rendered and a balance of the overall taste is reproduced, thus improving the overall taste. The fish sauce seasoning of the present invention is considered to be useful as an alternative to synthetic seasonings.

### [Industrial applicability]

The fish sauce seasoning of the present invention can be prepared in a simple manner using fish sauce as a natural material that exhibits superior savory sensation, comparable or superior to synthetic flavor enhancing materials such as MSG, IMP and GMP, in spite of being a natural seasoning, thus being useful as an alternative to synthetic seasonings and commercially available natural seasonings.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for preparing a fish sauce seasoning comprising:
(a) decolorizing and deodorizing a liquid fish sauce;
(b) concentrating the fish sauce obtained in step (a) and precipitating salts contained in the fish sauce in the form of a crystal;
(c) separating the fish sauce concentrate and the crystalline salts obtained in step (b) from each other; and
(d) repeating steps (b) and (c) one to five times.

2. The method according to claim 1, wherein the decolorization and deodorization in step (a) are carried out by adding activated carbon, wherein the activated carbon is present in an amount of 0.5 to 2.0% by weight, based on the total weight of the fish sauce.

3. The method according to claim 1, wherein step (b) is carried out at 50 to 60°C.

4. The method according to claim 1, wherein step (c) is carried out using at least one method selected from centrifugation, electrolysis and continuous desalination concentration.

5. The method according to claim 1, further comprising:
(e) powdering the fish sauce concentrate by drying after step (d).

6. A fish sauce seasoning prepared by the method according to any one of claims 1 to 5.

7. The fish sauce seasoning according to claim 6, wherein the fish sauce seasoning has a total nitrogen content of 3.0 to 7.0%, based on the total weight of the seasoning.
